(19) Europäisches Patentamt
European Patent Office
Office européen des brevets

(11) **EP 4 617 933 A1**

(12) **EUROPEAN PATENT APPLICATION**

(43) Date of publication:
**17.09.2025 Bulletin 2025/38**

(21) Application number: **24305367.5**

(22) Date of filing: **11.03.2024**

(51) International Patent Classification (IPC):
**G06F 21/77** (2013.01)   **G06F 8/65** (2018.01)
**H04L 9/32** (2006.01)

(52) Cooperative Patent Classification (CPC):
**G06F 21/77; G06F 8/65; H04L 9/3247**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **THALES DIS FRANCE SAS**
**92190 Meudon (FR)**

(72) Inventors:
• **ANG, Kok Boon**
  **528826 Singapore (SG)**
• **KRIZENECKY, Milan**
  **75013 Paris (FR)**

(74) Representative: **Quintero Romero, Manuel**
**Thales Dis France SAS**
**Intellectual Property Department**
**6, rue de la Verrerie**
**92190 Meudon (FR)**

(54) **IN-THE-FIELD PATCHING OF A SECURITY PROTOCOL IMPLEMENTATION**

(57) Deactivation of a first security protocol implementation by developing a patch that disables the first security protocol implementation, bundling the patch into an issuance solution that is deployable at a patch service, presenting the integrated circuit to the patch service, and receiving into the integrated circuit chip from the patch service the software patch disabling the first security protocol implementation.

Fig. 6

**Description**

## TECHNICAL FIELD

The present invention relates, generally, to integrated circuit chips, and, more particularly, to secure updating of the security protocol implemented in applications on embedded integrated circuit chips.

## BACKGROUND OF THE INVENTION

Secure integrated circuit chips, e.g., those found in smart cards, are an increasingly important mechanism for enhancing the security of many devices. For example, for as long as there have been passports, there have been forgers of passports. In an age-old cat- and-mouse game, passport issuers have sought to enhance the security of passports by introducing security features that are ever more difficult to forge while forgers seek to develop techniques to foil such security features. One mechanism for enhancing the security of passports has been the introduction of ePassports, i.e., passports that contain a secure integrated circuit chip.

Secure integrated circuit chips are tamper-resistant integrated circuits that include many security features. Often such chips are used to store sensitive information such as account numbers, login credentials, cryptographic keys, personal user-information including biometrics.

While secure integrated circuit chips contain many security features to enhance their tamper-resistance, they are still subject to attack by forgers and hackers who seek to either impersonate legitimate users of the chips or to access, illicitly, information stored on the chips. Therefore, much like the manufacturers of old-school security documents added new security features, manufacturers of secure integrated circuit chips must from time-to-time add new security features to enhance the security of their secure integrated circuit chips. For example, if a security flaw is exposed in a cryptographic algorithm, the manufacturer of the chip may be required to provide a fix to the algorithm that corrects the identified security flaw.

Many applications of integrated circuit chips mandate the use of specific security policies that are designed to protect information stored on the integrated circuit cards as well as the integrity of transactions performed using the integrated circuit cards. In the case of electronic machine readable travel documents (e-MRTD), the governing standards body, the International Civil Aviation Organization (ICAO), specifies two protocols: Basic Access Control (BAC) and Password Authenticated Connection Establishment (PACE), *see e.g.,* ICAO, DOC 9303, Machine Readable Travel Documents (Eighth Edition, 2021). ICAO specifies that until January 1, 2018 ePassports that use PACE should also deploy BAC and that such ePassports are deemed to have Supplemental Access Control (SAC).

It is often the case that as technology advances devices support both a legacy protocol and a newer protocol during a transition period. That is the case for ICAO access control mechanisms. BAC is considered a legacy protocol and PACE is considered a more secure mechanism.

One advantage of electronic documents and other computerized devices is the possibility of adding new features and functionality to a document or device. For example, if a bank introduces a new service, it may be necessary to add a new feature corresponding to the new service to a bank card held by customers of the bank.

Conversely, another advantage of electronic documents and other computerized devices is the potential for removal of features and functionality. For example, as many electronic security documents have very long validity periods, an issuer, e.g., a national passport issuance authority or a state driver's license authority, may wish to remove any unsecure security protocols before the expiration of the security document.

From the foregoing it is apparent that there is a need for an improved method to provide secure update of programs installed on secure integrated circuit chips to remove undesirable implementations, for example, removal of legacy security protocols supported during a transition from the legacy protocol to a more secure newer protocol.

## SUMMARY OF THE INVENTION

The present invention provides a solution for the aforementioned problems by a method for software provisioning for an integrated circuit chip according to claim 1, and an integrated circuit chip according to claim 13. In dependent claims, preferred embodiments of the invention are defined.

In a first inventive aspect, the invention provides a technology for software provisioning for an integrated circuit chip containing a first security protocol implementation and a second security protocol implementation to deactivate the first security protocol implementation to securely patch software of the integrated circuit chip so as to deactivate the first security protocol implementation while leaving a second security protocol implementation active. The method includes developing a patch that disables the first security protocol implementation, bundling the patch into an issuance solution that is deployable at a patch service, presenting the integrated circuit to the patch service, and receiving into the integrated circuit chip from the patch service the software patch disabling the first security protocol implementation.

In a particular embodiment, the disclosed technology further includes the steps of certifying the software patch disabling the first security protocol implementation, activating the patch at the patch service, and upon presentation of the integrated circuit to the patch service after activation of the patch, uploading the patch to the integrated circuit chip.

The patch service at which the integrated circuit chip receives the issuance solution including the patch may be integrated into a document inspection system operable to verify authenticity of a document into which the integrated circuit is incorporated. The patch service may be any of a document inspection system, a document verification kiosk, or an online service used for enrolling a document including the integrated circuit chip.

In a particular embodiment, the integrated circuit chip contains a first digital certificate and wherein the first and second security protocol implementations are included in an operating system of the integrated circuit chip, the method further comprising:

- operating a patch server to encrypt the patch that disables the first security protocol implementation;
- operating the patch server to transmit the encrypted patch to an issuing-authority server;
- operating the issuing-authority server to append the encrypted patch into a second digital certificate of the issuing authority in an extension to the second digital certificate;
- operating the issuing-authority server to transmit the second digital certificate including the encrypted patch to the patch service;
- operating the patch service to communicate with the integrated circuit chip upon presentation of the integrated circuit chip to the patch service;
- operating the patch service to transmit the second digital certificate including the encrypted patch to the integrated circuit chip;
- operating the integrated circuit chip to unpack the second digital certificate including the encrypted patch to recover the extension to the second digital certificate; and
- operating the integrated circuit chip

  ∘ to verify that the extension to the second digital certificate corresponds to the operating system of the integrated circuit chip; and
  ∘ if the extension is verified to correspond to the operating system of the integrated circuit chip, to decrypt the extension to the second digital certificate thereby recovering the software patch disabling the first security protocol implementation, and installing the software patch disabling the first security protocol implementation into the operating system of the integrated circuit chip thereby disabling the first security protocol implementation while leaving the second security protocol implementation active.

In a particular embodiment, the method further comprises:

- operating the patch server to digitally sign the encrypted patch; and
- operating the integrated circuit chip to verify the digital signature of encrypted patch prior to installing the patch into the operating system of the integrated circuit chip.

In a particular embodiment, the method comprises a preliminary step of installing a private key of the manufacturer of the integrated circuit chip into the integrated circuit chip; and wherein the patch server encrypts the patch using the public key corresponding to the private key of the manufacturer of the integrated circuit chip, and wherein the integrated circuit chip decrypts the extension to the digital certificate using the private key of the manufacturer.

In a particular embodiment, the method comprises a preliminary step of installing a secret key of the manufacturer of the integrated circuit chip into the integrated circuit chip; and wherein the patch server encrypts the patch using the secret key corresponding to the secret key of the manufacturer of the integrated circuit chip, and wherein the integrated circuit chip decrypts the extension to the digital certificate using the secret key of the manufacturer.

In a particular embodiment, the second digital certificate of the issuing authority is a link certificate that links to the first certificate of the certificate authority stored on the integrated circuit chip.

In a particular embodiment, the link certificate is a country verifying certificate authority link certificate and the extension to the link certificate contains an object identifier indicating the manufacturer of the integrated circuit chip as having originated the extension to the link certificate.

In a second aspect, the invention provides the integrated circuit chip, which, in particular embodiments, is embedded in an electronic security document. In a particular embodiment, the electronic security document is a machine-readable travel document.

The integrated circuit chip comprises:

- a processor; and
- a memory connected to the processor and containing instructions executable by the processor including an operating system; and
- instructions to cause the processor to:

  ∘ receive an issuance solution including a patch to deactivate a first access control protocol implementation;
  ∘ unpack the patch from the issuance solution;
  ∘ install the patch into program memory of the integrated circuit thereby deactivating the first access control implementation.

In a particular embodiment, the integrated circuit chip comprises instructions to cause the processor to:

- receive a digital certificate from a patch server via a verifier terminal, the digital certificate including an extension containing an encrypted patch for the operating system;

• unpack the digital certificate thereby recovering the extension to the digital certificate;

• verify that the extension to the digital certificate corresponds to the operating system of the integrated circuit chip; and

• if the extension is verified to correspond to the operating system of the integrated circuit chip, to decrypt the extension to the digital certificate thereby recovering the patch to the operating system of the integrated circuit chip, and installing the patch into the operating system of the integrated circuit chip.

In a particular embodiment, the instructions of the patch loader further comprise instructions to cause the processor to verify the digital signature of encrypted patch prior to installing the patch into the operating system of the integrated circuit chip.

In a particular embodiment, the memory further includes a private key of the manufacturer of the integrated circuit chip; and wherein the patch is encrypted using the public key corresponding to the private key of the manufacturer of the integrated circuit chip, and wherein the instructions further comprise instructions to cause the processor to decrypt the extension to the digital certificate using the private key of the manufacturer.

In a particular embodiment, the memory further includes a secret key of the manufacturer of the integrated circuit chip; and wherein the patch is encrypted using the shared secret key; and wherein the instructions further comprise instructions to cause the processor to decrypt the extension to the digital certificate using the shared secret key of the manufacturer.

In a particular embodiment, the second digital certificate of the issuing authority is a link certificate that links to the first certificate of the certificate authority stored on the integrated circuit chip.

In a particular embodiment, the link certificate is a country verifying certificate authority link certificate and the extension to the link certificate contains an object identifier indicating the manufacturer of the integrated circuit chip as having originated the extension to the link certificate.

All the features described in this specification (including the claims, description, and drawings) and/or all the steps of the described method can be combined in any combination, with the exception of combinations of such mutually exclusive features and/or steps.

## DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.

FIG. 1 is an illustration of a front cover of a passport book.

FIG. 2 is an illustration of a page of an electronic passport that includes an integrated circuit chip as an inlay in the page.

FIG. 3 is a high-level block diagram of an architecture of the integrated circuit chip of FIG. 2.

FIG. 4 is a block diagram illustrating data and programs stored in a memory that corresponds to the memory of FIG. 3.

FIG. 5 is a flow chart illustrating the steps from the deployment of two protocol implementations in a device to the removal of one of the protocols through a patch mechanism.

FIG. 6 is a block diagram illustrating the flow of a patch that removes one of the protocols through a patch mechanism as illustrated in FIG. 5.

FIG. 7 is a network diagram illustrating the flow of a patch from a manufacturer server to a device or document containing an integrated circuit chip (not shown) via a network.

FIG. 8 is a schematic of programs and data that may be included in a memory of an integrated circuit chip of an electronic passport.

FIG. 9 is a schematic illustration of a digital certificate that has a certificate body and a certificate extensions part.

FIG. 10 is a schematic illustration of a certificate extensions part for an electronic passport embodiment.

FIG. 11 is a data flow diagram illustrating the population of required keys on an integrated circuit chip, corresponding to an integrated circuit chip of FIG. 2.

FIG. 12, which is composed of FIGs. 12a and 12b, is a data flow diagram of the usage phase of the life cycle of an integrated circuit chip.

## DETAILED DESCRIPTION OF THE INVENTION

As it will be appreciated by one skilled in the art, aspects of the present invention may be embodied as a method for software provisioning for an integrated circuit chip, an integrated circuit chip, an electronic security document, or a machine-readable travel document.

The following description includes references to various methods executed by a processor of an integrated circuit chip. As is common in the field, there may be phrases herein that indicate these methods or method steps are performed by software instructions or software modules. As a person skilled in the art knows, such descriptions should be taken to mean that a processor, in fact, executes the methods, software instructions, and software modules.

The herein described technology provides a secure in-the-field software update mechanism for secure integrated circuit chips to remove a protocol implementation from secure integrated circuit chips through a patch mechanism.

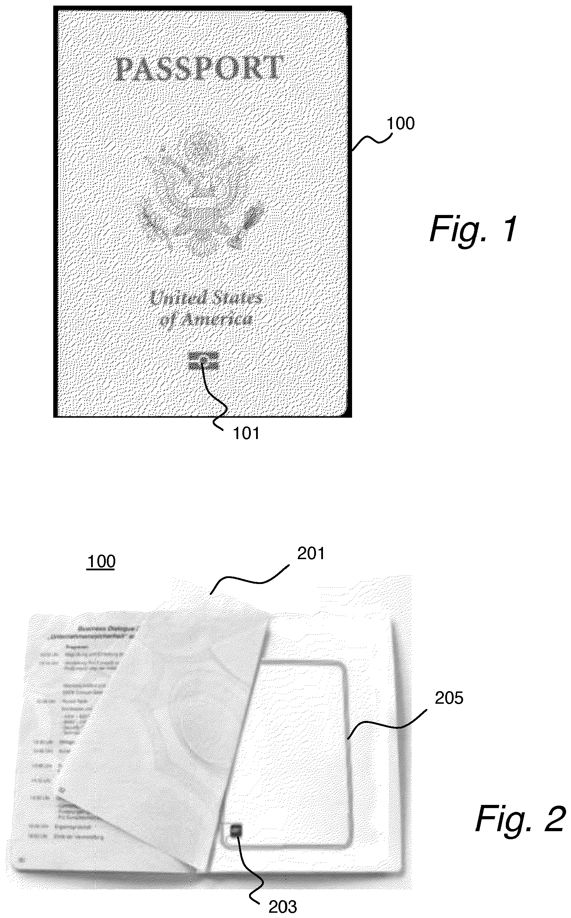

FIG. 1 is an illustration of a front cover of a passport book 100. The passport book 100 may be an electronic machine readable travel document (eMRTD). A symbol 101 indicates that the passport is an electronic passport containing an integrated circuit chip that may be read by a terminal at a border passport control station.

FIG. 2 is an illustration of a page 201 of an electronic passport 100 that includes an integrated circuit chip 203 as an inlay in the page 201. The page 201 also contains an antenna 205 connected to the integrated circuit chip 203 by which the integrated circuit chip 203 communicates with terminals.

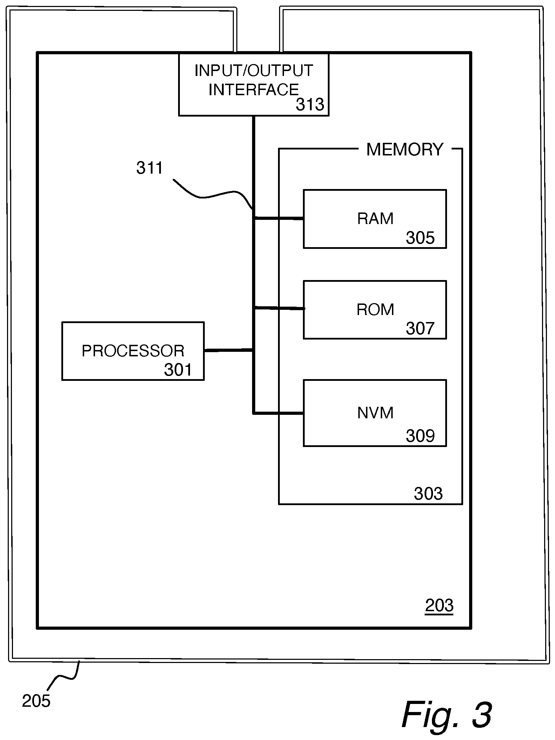

FIG. 3 is a high-level block diagram of an architecture of the integrated circuit chip 203 and the antenna 205. The integrated circuit chip 203 contains a processor 301 and a memory structure 303, which stores data and programs executable by the processor 301. The memory structure 303 may contain one or more of each of a random-access memory (RAM) 305, read-only memory (ROM) 307, and non-volatile programmable memory (NVM) 309. The memory devices 305, 307, and 309 are connected to the processor 301 via a bus 311.

The integrated circuit chip 203 further contains an input/output interface 313 for communicating to external devices, e.g., a terminal, via the antenna 205. For contactless communication, the input/output interface 313 may communicate with a terminal over the ISO 14443 protocol.

In alternative embodiments the integrated circuit chip 203 may include electrical contacts (not shown) for communicating over a contact interface to a terminal, for example, according to the ISO-7816 protocol or the Universal Serial Bus (USB) protocol.

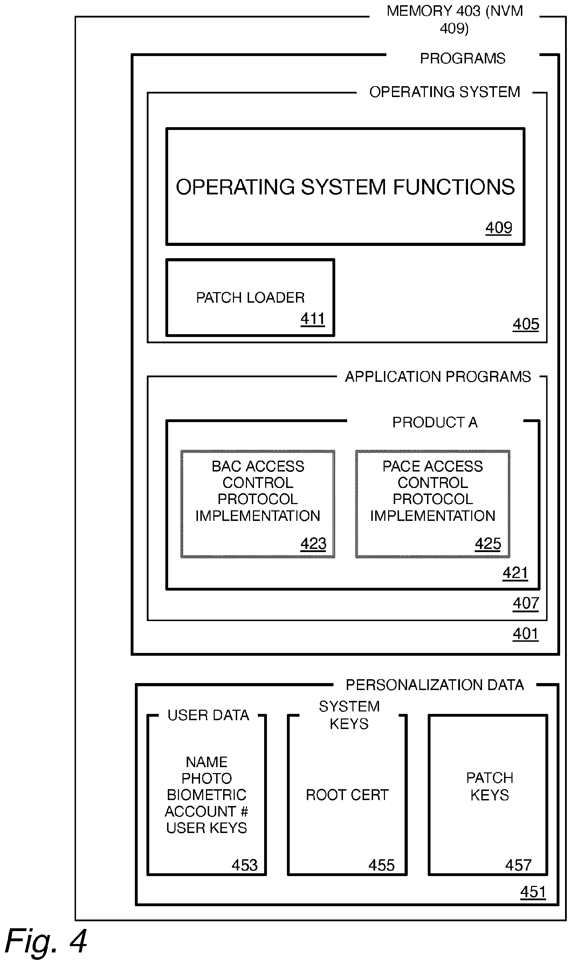

FIG. 4 is a block diagram illustrating data and programs stored in a memory 403 that corresponds to the memory 303 of FIG. 3. In a preferred embodiment, the data and programs illustrated as stored in the memory 403 are stored in an NVM 409 that corresponds to the NVM 309 of FIG. 3. However, other memory organizations are possible.

The memory 403 contains programs 401 and personalization data 451. The programs 401 are computer program instructions that cause the processor 301 to perform certain actions. The programs 401 include an operating system 405 and applications programs 407.

The operating system 405, in turn, contains a variety of operating system functions 409 and a patch loader 411. The operating system functions 409 may include, for example, a virtual machine for executing the application programs 407 and memory management functions.

The patch loader 411, which is described in greater detail below, performs functions related to receiving a patch, verifying that the patch originates with the manufacturer of the integrated circuit chip 203 (or from another trusted source), decrypting an encrypted patch, and installing the patch into the operating system 405.

The application programs may include one or more applications that include implementations of access control protocols. In the example of FIG. 4, a product A 421 is a software product deployed on an electronic identity document, e.g., an electronic machine readable travel document (e-MRTD), i.e., an ePassport. The product A 421 provides implementations of two access control protocols, a BAC access control protocol implementation 423 and a PACE access control protocol implementation 425.

As discussed in greater detail hereinbelow, the patch loader 411 is used to load a patch that updates the access control protocols in such a way as to eliminate one of the access control protocols. In a preferred embodiment, the BAC access control protocol 423, being considered a legacy protocol, is removed through the installation of a patch using the patch loader 411.

There are multiple ways in which the patch may operate to deactivate one of the loaded access control protocols. For example, the patch may simply overwrite all memory locations in which the access control protocol to be deactivated is located. Alternatively, in a directory of loaded modules, the patch may operate to overwrite an entry for the access control protocol to be deactivated. In another embodiment, the patch code redirects any attempt to use the implementation of the access control protocol to be deactivated to the other access control protocol, in the preferred embodiment from BAC to PACE.

The patch may also be used to add other functionality unrelated to access control mechanisms. Thus, the storage space used for the implementation of the access control protocol to be deactivated may be overwritten with code to implements said new unrelated functionality.

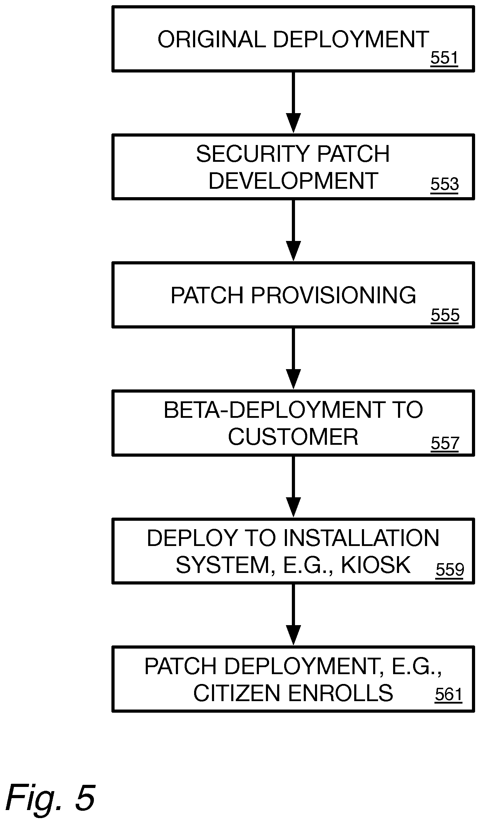

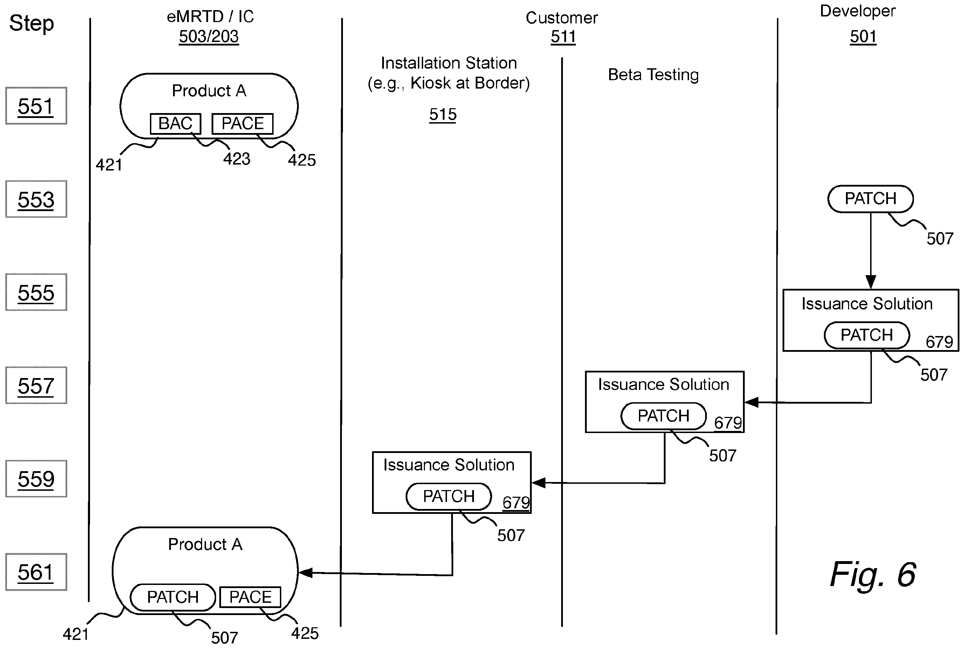

FIG. 5 is a flow chart illustrating the steps involved in deactivating an access control protocol limitation using a patch. FIG. 6 is a timing sequence diagram illustrating process and message flow between a product developer 501, a customer 511, for example, a national passport authority, and an eMRTD device 503, which may correspond the electronic passport 100. The following discussion makes parallel reference to FIGs. 5 and 6.

In a first step 551, a device 503, e.g., the electronic passport 100 including integrated circuit 203, is deployed with one or more software applications including at least two access control protocol implementations, e.g., as illustrated in FIG. 4 with product A 421 having a BAC access control protocol implementation 423 and a PACE access control protocol implementation 425.

Alternatively, the dual-protocol implementation, e.g., as illustrated in FIG. 4 is achieved by installing as a patch during an enrollment phase.

In a subsequent step 553, a security patch 507 is developed that includes code to deactivate one of the access control protocol implementations.

In a provisioning step, step 555, the security patch 507 is bundled into an issuance solution 679 that is a software solution ready for deployment at a document inspection system, e.g., as may be deployed for reading eMRTDs at a border station, a document verification kiosk, which may be deployed as a self-service station at a border checkpoint, or as an online service used, for example, to enroll a document including an integrated circuit chip 203. As part of the provisioning step, the issuance solution 679 may be transmitted to the customer 511 for beta testing, step 557, in which the customer 511 validates the issuance solution 679, for example, through a pilot deployment.

Following beta testing, the issuance solution 679 is deployed to patch issuance systems 515, e.g., at document inspection systems, kiosks, or online enrollment services, step 559.

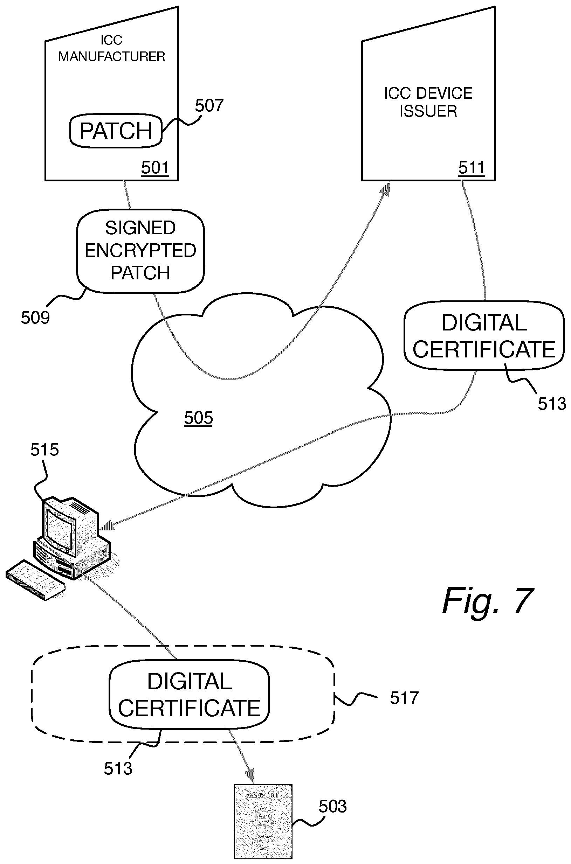

In a patch installation step 561, for which one embodiment is described herein below in conjunction with FIGs. 7 through 12, the issuance solution 679 containing the patch 507 is installed on an eMRTD 503, i.e., on the integrated circuit 203 of an eMRTD 503 such as an electronic passport 100. This installation step 561 may occur seamlessly to the bearer of the eMRTD 503, for example, as the bearer presents their electronic passport at a border station, for example, to a terminal 515 (FIG. 7), which may be a passport verification terminal or kiosk operated at a passport control at a national border or port-of-entry, or an online enrollment service operated by a national passport issuing authority.

As discussed hereinabove, the patch 507 is designed such as to deactivate one of the access control protocol implementations, e.g., the implementation of the BAC protocol 423. Thus, once the patch 507 has been installed by the patch loader 411 (FIG. 4), the deactivated access control implementation 423 is no longer active on the device 503.

The protocol-deactivating patch 507 may be developed contemporaneously with the original deployment in step 551 and pre-installed in the device 503 at a device issuance phase or personalization phase. In such a case, the patch 507 lays dormant within the integrated circuit 203 and is activated by the issuing authority 511 at such point that the issuing authority deems that one of the access control protocols are no longer required. When a document bearer next presents their device 503 to a patch installation system 515, the patch 507 - having been activated - is seamlessly installed into the integrated circuit 203 of the device 503.

FIGs. 7 through 12 describe one mechanism for securely deploying a patch, for example, to an eMRTD that may be utilized to securely deploying a patch to deactivate an access control protocol implementation in an eMRTD.

FIG. 7 is a network diagram illustrating the flow of a patch 507 from a manufacturer 501 to a device or document 503 containing an integrated circuit chip 203 (not shown) via a network 505. The manufacturer, e.g., the manufacturer 501 of the integrated circuit chip 203 creates a patch 507 to the operating system 409. The manufacturer 501 encrypts and signs the patch and transmits the signed encrypted patch 509 to an ICC device issuer 511, e.g., a national passport issuing authority.

The ICC device issuer 511 incorporates the signed encrypted patch 509 into a digital certificate 513, e.g., a link certificate that links an expired or expiring digital certificate to a replacement digital certificate, and transmits the digital certificate 513 to a terminal 515, e.g., a passport verifier terminal operated at a passport control at a national border or port-of-entry.

A bearer of the device 503, e.g., a traveler carrying an electronic passport, presents the device 503 to the terminal 515. A communications link is established between the device 503 and the terminal. The communications link may be either a contact-based communications link operating over, for example, the ISO 7816 protocol or Universal Serial Bus protocol, or a contactless communications link, e.g., near field communication (NFC) or communication over the ISO/IEC 14443 protocol.

The terminal 515 then transmits the digital certificate 513 to the device 503 as part of a terminal authentication process 517.

Returning now to FIG. 4, the patch loader 411 receives a patch that is signed and encrypted from the issuer authority via a terminal. Upon receipt of the signed and encrypted patch, the patch loader 411 verifies the source of the patch, decrypts the patch, and installs the patch thereby deactivating one of the access control protocol implementations, e.g., the implementation for the BAC protocol 421.

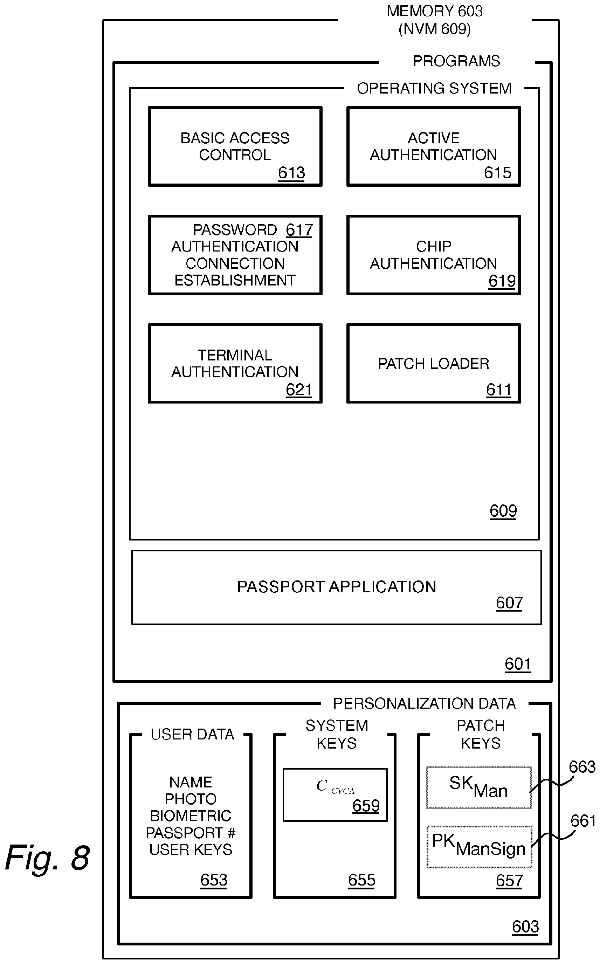

While the mechanisms described herein apply to patching the operating system 405, the mechanisms may also be used in patching application programs 407. Indeed, the boundary between application programs 407 and operating system 405 may be rather blurry in some environments. Indeed, in the example of FIG. 8, described in greater detail hereinbelow, the access control implementations for BAC 613 and PACE 617 are located within the device operating system.

The personalization data 451 may include user data 453, system keys 455, and patch keys 457. The user data 453 may include biographical information - such as name and birthdate, biometric data - such as photograph, fingerprint, and retina scans, account information, and user keys. The system keys 455 may include root certificates. The patch keys 457 include keys that are used to verify the origin of a patch file and to decrypt a patch file.

FIG. 8 is a schematic of programs and data that may be included in a memory 603 (e.g., and NVM 609) of an integrated circuit chip of an electronic passport 100 where the memory 603 and NVM 609 correspond to the memory 303 and NVM 309 of FIGs. 3 as well as the memory 403 and the NVM 409 of FIG. 4, respectively, and contains programs 601, corresponding to programs 401 of FIG. 4, including an operating system 609.

For an ePassport, the operating system 609 may include various ePassport functions, such as Basic Access Control (BAC) 613, Active Authentication 615, Password Authentication Connection Establishment (PACE) 617, Chip Authentication 619, and Terminal Authentication 621. These ePassport functions are described in Bundesamt für Sicherheit in der Informationstechnik, *BSI TR-03110 Technical Guideline Advanced Security Mechanisms for Machine Readable Travel Documents and eIDAS Token,* https://www.bsi.bund. de/EN/Publications/TechnicalGuidelines/TR03110/ BSITR03110.html *, accessed on,* October 30, 2018 (hereinafter, "TR-03110") and in International Civil Aviation Organization (ICAO), Doc 9303, Machine Readable Travel Documents, https://www.icao. int/publications/pages/publication.aspx?docnum=9303, *accessed on* October 30, 2018.

The operating system 609 further includes the patch loader 611, which corresponds to the patch loader 411 of FIG. 4.

For an electronic passport embodiment as illustrated in FIG. 6, the application program 407 of FIG. 4 may be a passport application 607, which may grant access to the user data 653 depending on authentication context 613, 617, 621.

As discussed in conjunction with FIG. 4, the personalization data may contain certain personal information 653. In the context of electronic passports, this may include passport number as well as travel information.

An electronic passport performs various verification functions, e.g., terminal authentication 621, to verify that the sensitive information stored therein is not obtained by an entity that does not have the requisite authorization to access the information. One mechanism is by verifying that certificates provided by the terminal have been signed by a trusted certificate authority. To do so, the integrated circuit chip of an electronic passport contains a *Country Verifying Certificate Authority certificate* ($C_{CVCA}$) 659 in the system keys 655.

The patch loader 611 verifies the signed encrypted patch using a public signature key of the manufacturer ($PK_{ManSign}$) 661 or using a secret key provisioned during a pre-personalization/manufacturing phase and if the verification is positive, the patch loader decrypts the encrypted patch 509 using a secret key of the manufacturer ($SK_{Man}$) 663. The manufacturer secret key ($SK_{Man}$) 663 may be either a shared secret key, for example, provisioned during the pre-personalization/manufacturing phase, or a private key of a PKI (Public Key Infrastructure) keypair.

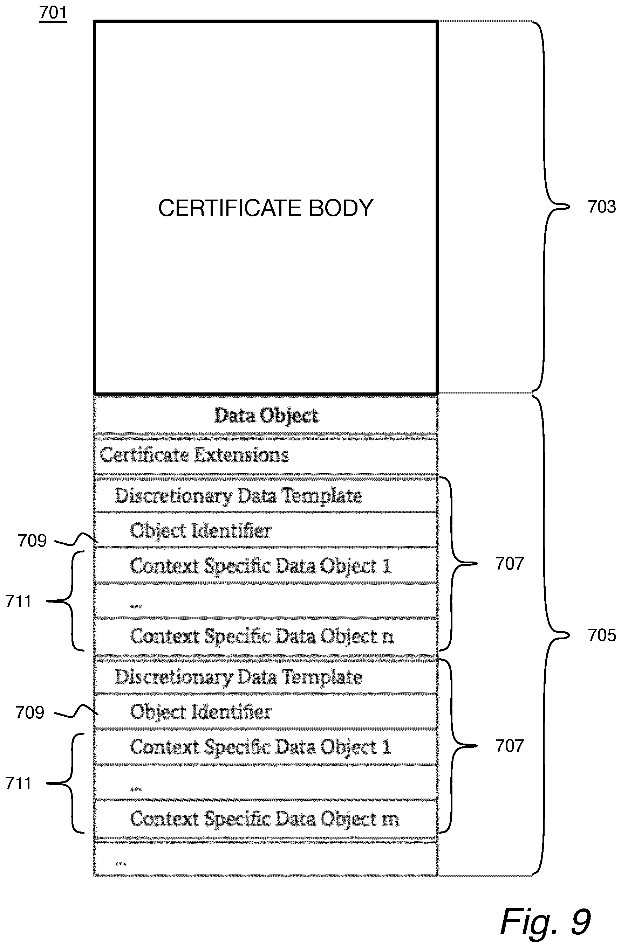

The issuing authority 511 incorporates the signed encrypted patch into a digital certificate 513. FIG. 9 is a schematic illustration of a digital certificate 701 that has a certificate body 703 and a certificate extensions part 705.

The certificate body 703 may contain a public key of a certificate authority and certain other pertinent information, e.g., validity dates.

The certificate extensions part 705 contains one or more certificate extensions 707 each following a prescribed template. A certificate extension 707 is introduced by an object identifier 709 followed by a sequence of context dependent data objects 711. The object identifier 709 may identify to which integrated circuit chip the extension 707 pertains, e.g., the manufacturer of the integrated circuit chip, so that integrated circuit chips to which the extension 707 does not apply - i.e., considered a non-critical extension - may ignore the extension 707.

In one embodiment, the certificate extensions part 705 and certificate extensions 707 follow the format described in Bundesamt für Sicherheit in der Informationstechnik, *BSI TR-03110 Technical Guideline Advanced Security Mechanisms for Machine Readable Travel Documents and eIDAS Token,* Part 3: Common Specifications, https://www.bsi.bund.de/EN/Publications/TechnicalGuidelines/TR03110/BSITR03110.html *, accessed on,* October 30, 2018, (incorporated herein by reference) at pages 89-90.

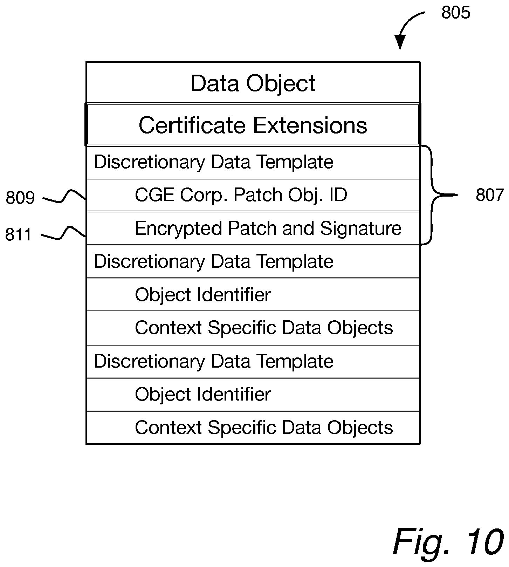

FIG. 10 is a schematic illustration of a certificate extensions part 805, corresponding to the certificate extensions part 705 of FIG. 7, for example, for an electronic passport embodiment. The certificate extensions part 805 includes a certificate extension 807 that has an object identifier 809 which identifies the extension as a patch originating with Claire Greystone Enterprises Corporation (CGE Corp., a fictitious corporation). Integrated circuit chips not originating from CGE Corp. may ignore the extension 807. Indeed, such other ICCs would not have the requisite keys to decrypt the patch. The certificate extension 807 further includes encrypted patch and signature 811.

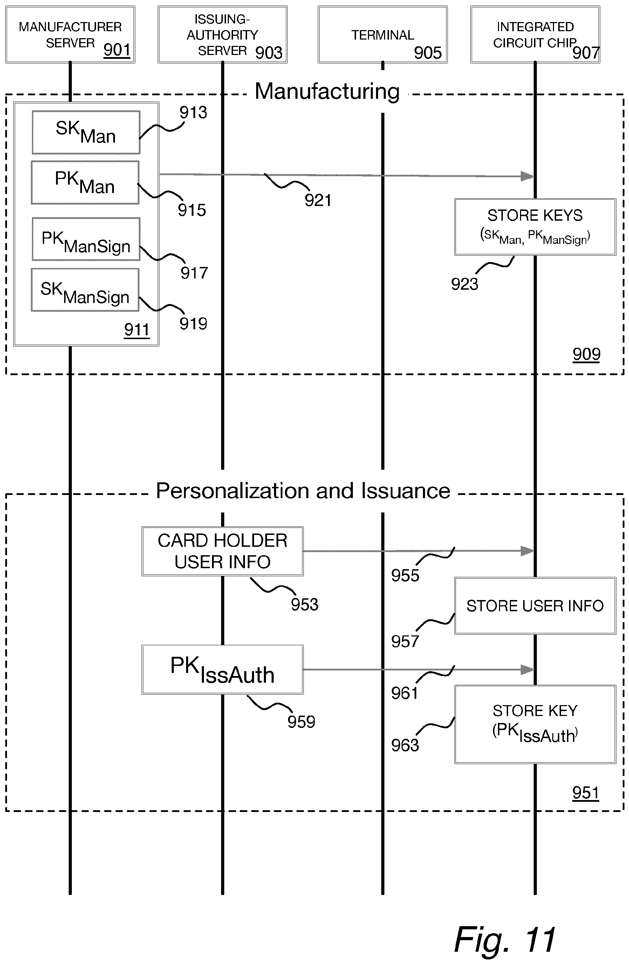

FIG. 11 is a data flow diagram illustrating the population of required keys on an integrated circuit chip 907, corresponding to an integrated circuit chip 203 of FIG. 2. As noted above, the patching of an integrated circuit chip includes four nodes: the manufacturing server 901 operated by a manufacturer 501, an issuing-authority server 903 operated by the integrated circuit chip issuer 511, the terminal 905 corresponding to the terminal 515, and the integrated circuit chip 907 corresponding to the integrated circuit chip 203. Integrated circuit chips go through various phases during their life cycle. A first phase is the manufacturing phase 909 during which the manufacturer generates encryption, decryption, and signature keys, step 911.

The integrated circuit chip 907 decrypts the encrypted patch 509 using the decryption key of the manufacturer. The encryption and decryption of the patch may be based on either shared secret cryptography or PKI. In either, the decryption key is a secret key of the manufacturer and is thus depicted here as $SK_{Man}$ 913. In an alternative embodiment, the encryption is performed using a public key. In such an embodiment, the manufacturer may also generate and store a public key of the manufacturer ($PK_{Man}$) 915.

The signing of the encrypted patch 509 and verification of the signature is performed using PKI. Thus, the manufacturer generates a PKI keypair, the public signature key of the manufacturer ($PK_{ManSign}$) 917 and the corresponding secret signature key of the manufacturer ($SK_{ManSign}$) 919. The manufacturer server 901 transmits the $PKManSign$ key 917 and the $SK_{Man}$ key 913 to the integrated circuit chip 907, step 921, and the integrated circuit chip 907 stores the keys in the memory of the integrated circuit chip 907, step 923. The steps 921 and 923 of transmitting and storing may be performed using a write operation in which the manufacturer server 901 writes directly into the memory of the integrated circuit chip 907. Alternatively, the signing of the encrypted patch 509 and verification of the signature is performed using secret-key cryptography. In that case, rather than generating and storing a PKI keypair, a secret key is generated and stored.

The personalization and issuance phase 951 follows the manufacturing phase 909 in the life cycle of an integrated circuit chip 203. During personalization 951 the issuing-authority server 903 obtains user info, step 953, e.g., biographical and biometric information associated with the card holder, step 955, which is then transmitted to the integrated circuit chip 907, which in turn stores the user info, step 957.

The issuing-authority server 903 also transmits the public key ($PK_{IssAuth}$) 959 of the issuing authority to the integrated circuit chip 907, step 961. The integrated circuit chip 907 stores the key $PK_{IssAuth}$ 959, step 963. The public key $PK_{IssAuth}$ 959 may be a digital certificate. In an electronic passport embodiment the public key may be the certificate of the Country Verifying Certificate Authority ($C_{CVCA}$) as described in TR-31110.

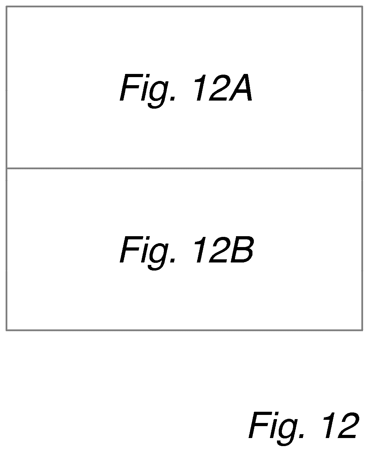

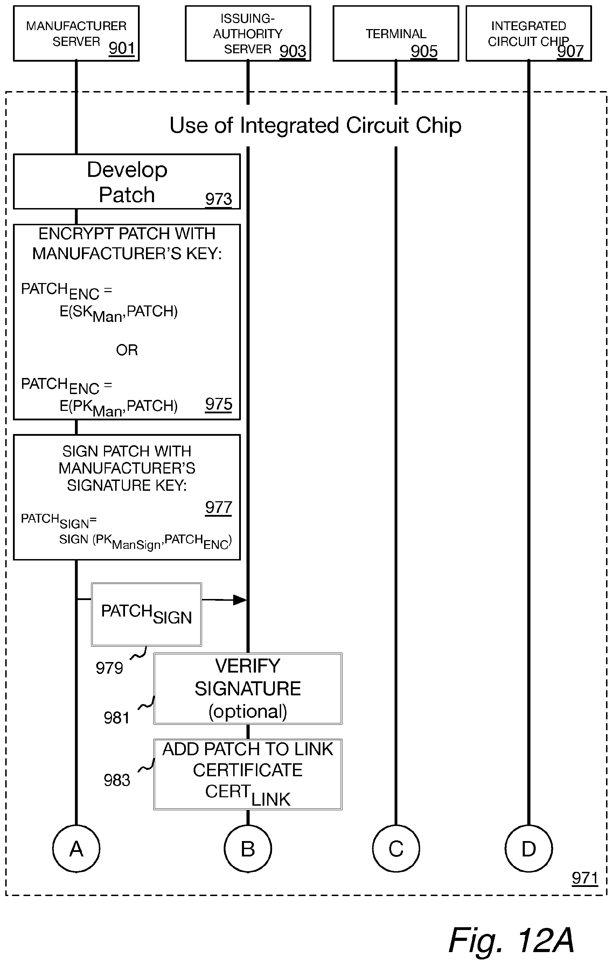

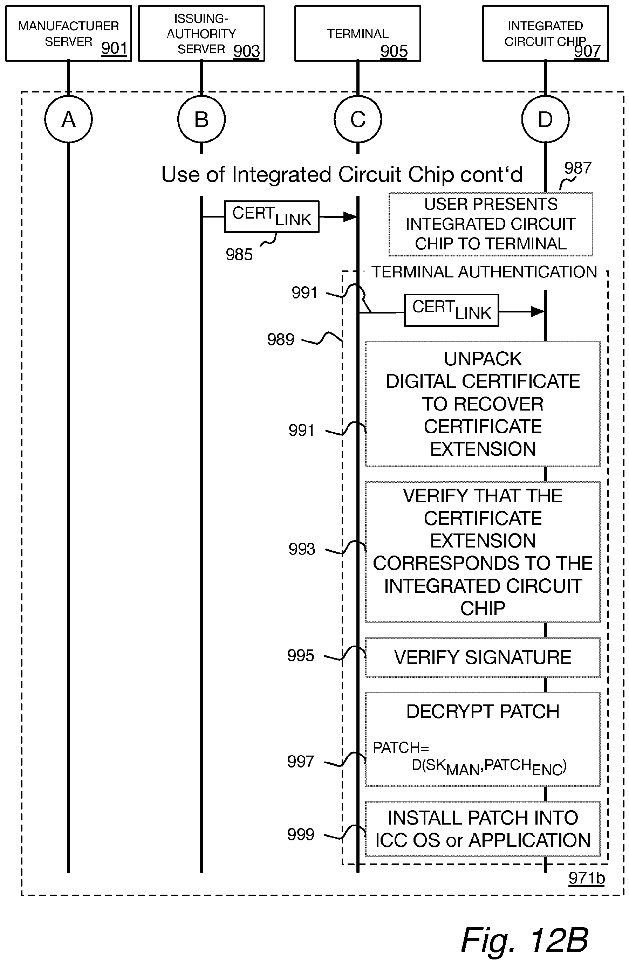

FIG. 12a and 12b combine to form a data flow diagram of the usage phase 971 (consisting of a first portion 971a of FIG. 12a and a second portion 971b of FIG. 10b) of the life cycle of an integrated circuit chip 907. During the usage phase 971, the integrated circuit chip 907 has been incorporated into a device, e.g., a smartcard or an electronic passport. From time-to-time during the usage phase 971, the user, e.g., a traveler, may present the integrated circuit chip 907, or more the device in which it is incorporated, to a terminal 905.

During the usage of an integrated circuit chip 907, there may be a need or desire to update the operating system of the integrated circuit chip 907 by developing operating system or application patches, step 973, e.g., patches to deactivate legacy protocols such as obsolete access control protocols. In a preferred embodiment, as discussed above, the developed patch deactivates the BAC protocol implementation 423/613.

To ensure that that patch is only available to an authorized integrated circuit chip 907 and not accessible to any other parties, the manufacturer server 901 encrypts the patch, step 975. The encryption may either be using a shared secret key ($SK_{Man}$) of the manufacturer:

$$PATCH_{ENC} = E(SK_{MAN}, PATCH)$$

Or, according to PKI, using a public key ($PK_{Man}$) of the manufacturer:

$$PATCH_{ENC} = E(PK_{MAN}, PATCH)$$

The manufacturer server 901 also signs the encrypted patch $PATCH_{ENC}$ producing a signed encrypted patch ($PATCH_{SIGN}$), step 977. The signed encrypted patch is produced using PKI by signing with the secret signing key of the manufacturer ($SK_{ManSign}$).

$$PATCH_{SIGN} = SIGN(SK_{ManSign}, PATCH_{ENC})$$

Alternatively, the patch is signed with secret-key cryptography using a stored secret key.

The manufacturer server 901 transmits the signed encrypted patch ($PATCH_{SIGN}$) to the issuing-authority server 903, step 979.

Optionally, the issuing-authority server 903 verifies the signature of the signed encrypted patch, step 981. If the verification fails (path not illustrated), an error condition is flagged and an error corrective action, e.g., terminating the process or alerting relevant authorities of a potential attempted security breach, is taken.

Alternatively, the issuing-authority server 903 simply transmits (as described below) the signed encrypted patch to the ICC without verification of the signature of the issuing-authority.

If the signature verification of step 981 is successful (or not performed), the issuing-authority adds the signed encrypted patch ($PATCH_{SIGN}$) to a digital certificate, e.g., as a certificate extension to a link certificate ($CERT_{LINK}$), step 983, as described hereinabove.

Continuing now on FIG. 12b. The issuing-authority server 903 transmits the digital certificate ($CERT_{LINK}$) to the terminal 905, step 985.

A user presents the integrated circuit chip 907 to the terminal 905, step 987. The terminal and integrated circuit chip 907 establish a communication channel.

During a terminal authentication phase 989, the terminal 905 transmits the digital certificate to the integrated circuit chip 907, step 991.

The integrated circuit chip 907 unpacks the digital certificate, step 993, to recover the certificate extension 707.

The integrated circuit chip reads the object identifier tag 709 of the certificate extension 707. If the object identifier tag 709 corresponds to the manufacture of the integrated circuit chip 907, the integrated circuit chip proceeds with installing the operating system patch carried in the digital certificate. Otherwise, if the object identifier tag 709 does not correspond to the manufacture of the integrated circuit chip 907, the integrated circuit chip 907 ignores the extension 707.

The integrated circuit chip 907 verifies the digital certificate 991 as matching the manufacturer 901 and being signed by a trusted certificate authority, step 993. If the verification is unsuccessful, an error condition is flagged and corrective action taken (not illustrated).

The digital signature is a match for the integrated circuit chip 907 manufacturer, the integrated circuit chip 907 decrypts the encrypted patch, step 997:

$$PATCH = D(SK_{MAN}, PATCH_{ENC})$$

Finally, the integrated circuit chip 907 installs the patch into the operating system 405 or application 407, step 999.

From the foregoing it will be apparent that an efficient and secure mechanism for in-field installation of operating system patches in an operating system of an integrated circuit chip is provided.

**Claims**

1. A method for software provisioning for an integrated circuit chip containing a first security protocol implementation and a second security protocol implementation to deactivate the first security protocol implementation to securely patch software of the integrated circuit chip so as to deactivate the first security protocol implementation while leaving a second security protocol implementation active, the method comprising:

   • developing a patch that disables the first security protocol implementation;
   • bundling the patch into an issuance solution that is deployable at a patch service;
   • presenting the integrated circuit to the patch service; and
   • receiving into the integrated circuit chip from the patch service the software patch disabling the first security protocol implementation.

2. The method according to claim 1, further comprising:

   • certifying the software patch disabling the first security protocol implementation;
   • activating the patch at the patch service; and
   • upon presentation of the integrated circuit to the patch service after activation of the patch, uploading the patch to the integrated circuit chip.

3. The method according to any of claims 1 or 2, wherein the patch service is integrated into a document inspection system operable to verify authenticity of a document into which the integrated circuit is incorporated.

4. The method according to any of the preceding claims, wherein the patch service is selected from a document inspection system, a document verification kiosk, or an online service used for enrolling a document including the integrated circuit chip.

5. The method according to any of the preceding claims, wherein the integrated circuit chip contains a first digital certificate and wherein the first and second security protocol implementations are included in an operating system of the integrated circuit chip, the method further comprising:

   • operating a patch server to encrypt the patch that disables the first security protocol implementation;
   • operating the patch server to transmit the encrypted patch to an issuing-authority server;
   • operating the issuing-authority server to append the encrypted patch into a second digital certificate of the issuing authority in an extension to the second digital certificate;
   • operating the issuing-authority server to transmit the second digital certificate including the encrypted patch to the patch service;
   • operating the patch service to communicate with the integrated circuit chip upon presentation of the integrated circuit chip to the patch service;
   • operating the patch service to transmit the second digital certificate including the encrypted patch to the integrated circuit chip;
   • operating the integrated circuit chip to unpack the second digital certificate including the encrypted patch to recover the extension to the second digital certificate; and
   • operating the integrated circuit chip

      ○ to verify that the extension to the second digital certificate corresponds to the operating system of the integrated circuit chip; and
      ○ if the extension is verified to correspond to the operating system of the integrated circuit chip, to decrypt the extension to the second digital certificate thereby recovering the software patch disabling the first security protocol implementation, and installing the software patch disabling the first security protocol implementation into the operating system of the integrated circuit chip thereby disabling the first security protocol implementation while leaving the second security protocol implementation active.

6. The method according to any of the preceding claims, further comprising:

    • operating the patch server to digitally sign the encrypted patch; and
    • operating the integrated circuit chip to verify the digital signature of encrypted patch prior to installing the patch into the operating system of the integrated circuit chip.

7. The method according to claims 5 or 6, further comprising a preliminary step of installing a private key of the manufacturer of the integrated circuit chip into the integrated circuit chip; and wherein the patch server encrypts the patch using the public key corresponding to the private key of the manufacturer of the integrated circuit chip, and wherein the integrated circuit chip decrypts the extension to the digital certificate using the private key of the manufacturer.

8. The method according to claims 5 or 6, further comprising a preliminary step of installing a secret key of the manufacturer of the integrated circuit chip into the integrated circuit chip; and wherein the patch server encrypts the patch using the secret key corresponding to the secret key of the manufacturer of the integrated circuit chip, and wherein the integrated circuit chip decrypts the extension to the digital certificate using the secret key of the manufacturer.

9. The method according to any of the claims 5 to 8, wherein the second digital certificate of the issuing authority is a link certificate that links to the first certificate of the certificate authority stored on the integrated circuit chip.

10. The method according to the preceding claim, wherein the link certificate is a country verifying certificate authority link certificate and the extension to the link certificate contains an object identifier indicating the manufacturer of the integrated circuit chip as having originated the extension to the link certificate.

11. The method according to any of the preceding claims, wherein the integrated circuit chip is embedded in an electronic security document.

12. The method according to any of the preceding claims, wherein the electronic security document is a machine-readable travel document.

13. An integrated circuit chip comprising:

    • a processor; and
    • a memory connected to the processor and containing instructions executable by the processor including an operating system; and
    • instructions to cause the processor to:

        ○ receive an issuance solution including a patch to deactivate a first access control protocol implementation;
        ○ unpack the patch from the issuance solution;
        ○ install the patch into program memory of the integrated circuit thereby deactivating the first access control implementation.

14. The integrated circuit chip of claim 13, further comprising instructions to cause the processor to:

    • receive a digital certificate from a patch server via a verifier terminal, the digital certificate including an extension containing an encrypted patch for the operating system;
    • unpack the digital certificate thereby recovering the extension to the digital certificate;
    • verify that the extension to the digital certificate corresponds to the operating system of the integrated circuit chip; and
    • if the extension is verified to correspond to the operating system of the integrated circuit chip, to decrypt the extension to the digital certificate thereby recovering the patch to the operating system of the integrated circuit chip, and installing the patch into the operating system of the integrated circuit chip.

15. The integrated circuit chip according to any of claims 13 or 14, where the instructions of the patch loader further comprise instructions to cause the processor to verify the digital signature of encrypted patch prior to installing the patch into the operating system of the integrated circuit chip.

100

101

*Fig. 1*

100

201

205

203

*Fig. 2*

INPUT/OUTPUT
INTERFACE
313

MEMORY

311

RAM
305

ROM
307

PROCESSOR
301

NVM
309

303

203

205

*Fig. 3*

MEMORY 403 (NVM 409)

PROGRAMS

OPERATING SYSTEM

OPERATING SYSTEM FUNCTIONS

409

PATCH LOADER

411

405

APPLICATION PROGRAMS

PRODUCT A

BAC ACCESS CONTROL PROTOCOL IMPLEMENTATION

423

PACE ACCESS CONTROL PROTOCOL IMPLEMENTATION

425

421

407

401

PERSONALIZATION DATA

USER DATA

NAME
PHOTO
BIOMETRIC
ACCOUNT #
USER KEYS

453

SYSTEM KEYS

ROOT CERT

455

PATCH KEYS

457

451

*Fig. 4*

```
┌─────────────────────────────────┐
│   ORIGINAL DEPLOYMENT           │
│                          551    │
└─────────────────────────────────┘
                │
                ▼
┌─────────────────────────────────┐
│     SECURITY PATCH              │
│     DEVELOPMENT          553    │
└─────────────────────────────────┘
                │
                ▼
┌─────────────────────────────────┐
│    PATCH PROVISIONING           │
│                          555    │
└─────────────────────────────────┘
                │
                ▼
┌─────────────────────────────────┐
│   BETA-DEPLOYMENT TO            │
│     CUSTOMER             557    │
└─────────────────────────────────┘
                │
                ▼
┌─────────────────────────────────┐
│  DEPLOY TO INSTALLATION         │
│  SYSTEM, E.G., KIOSK     559    │
└─────────────────────────────────┘
                │
                ▼
┌─────────────────────────────────┐
│  PATCH DEPLOYMENT, E.G.,        │
│    CITIZEN ENROLLS       561    │
└─────────────────────────────────┘
```

*Fig. 5*

*Fig. 6*

ICC
MANUFACTURER

507

PATCH

501

ICC DEVICE
ISSUER

511

SIGNED
ENCRYPTED
PATCH

509

505

DIGITAL
CERTIFICATE

513

515

*Fig. 7*

DIGITAL
CERTIFICATE

517

513

PASSPORT

503

United States
of America

MEMORY 603
(NVM 609)

PROGRAMS

OPERATING SYSTEM

BASIC ACCESS
CONTROL
<u>613</u>

ACTIVE
AUTHENTICATION
615

PASSWORD <u>617</u>
AUTHENTICATION
CONNECTION
ESTABLISHMENT

CHIP
AUTHENTICATION
<u>619</u>

TERMINAL
AUTHENTICATION
<u>621</u>

PATCH LOADER
<u>611</u>

<u>609</u>

PASSPORT APPLICATION
<u>607</u>

<u>601</u>

PERSONALIZATION DATA

USER DATA

NAME
PHOTO
BIOMETRIC
PASSPORT #
USER KEYS
<u>653</u>

SYSTEM
KEYS

$C_{CVCA}$
<u>659</u>

<u>655</u>

PATCH
KEYS

$SK_{Man}$ — 663

$PK_{ManSign}$ — 661
<u>657</u>

<u>603</u>

*Fig. 8*

701

CERTIFICATE BODY

703

| **Data Object** |
|---|
| Certificate Extensions |
| Discretionary Data Template |
| Object Identifier |
| Context Specific Data Object 1 |
| ... |
| Context Specific Data Object n |
| Discretionary Data Template |
| Object Identifier |
| Context Specific Data Object 1 |
| ... |
| Context Specific Data Object m |
| ... |

709

711

707

709

711

707

705

*Fig. 9*

805

| Data Object |
| --- |
| **Certificate Extensions** |
| Discretionary Data Template |
| CGE Corp. Patch Obj. ID |
| Encrypted Patch and Signature |
| Discretionary Data Template |
| Object Identifier |
| Context Specific Data Objects |
| Discretionary Data Template |
| Object Identifier |
| Context Specific Data Objects |

809

811

807

*Fig. 10*

Fig. 11

Fig. 12A

Fig. 12B

Fig. 12

| MANUFACTURER SERVER 901 | ISSUING-AUTHORITY SERVER 903 | TERMINAL 905 | INTEGRATED CIRCUIT CHIP 907 |

Use of Integrated Circuit Chip

Develop Patch 973

ENCRYPT PATCH WITH MANUFACTURER'S KEY:

$$PATCH_{ENC} = E(SK_{Man}, PATCH)$$

OR

$$PATCH_{ENC} = E(PK_{Man}, PATCH) \quad \underline{975}$$

SIGN PATCH WITH MANUFACTURER'S SIGNATURE KEY:

$$977$$

$$PATCH_{SIGN} = SIGN(PK_{ManSign}, PATCH_{ENC})$$

$$PATCH_{SIGN}$$

979

VERIFY SIGNATURE (optional)

981

ADD PATCH TO LINK CERTIFICATE $CERT_{LINK}$

983

A    B    C    D

971

*Fig. 12A*

MANUFACTURER SERVER **901**

ISSUING-AUTHORITY SERVER **903**

TERMINAL **905**

INTEGRATED CIRCUIT CHIP **907**

(A)     (B)     (C)     (D)

987

## Use of Integrated Circuit Chip cont'd

$CERT_{LINK}$ → 985

USER PRESENTS INTEGRATED CIRCUIT CHIP TO TERMINAL

TERMINAL AUTHENTICATION

991 → $CERT_{LINK}$ →

989 →

**UNPACK DIGITAL CERTIFICATE TO RECOVER CERTIFICATE EXTENSION**

991 →

**VERIFY THAT THE CERTIFICATE EXTENSION CORRESPONDS TO THE INTEGRATED CIRCUIT CHIP**

993 →

**VERIFY SIGNATURE**

995 →

**DECRYPT PATCH**

PATCH= $D(SK_{MAN}, PATCH_{ENC})$

997 →

**INSTALL PATCH INTO ICC OS or APPLICATION**

999 →

971b

*Fig. 12B*

Europäisches
Patentamt

European
Patent Office

Office européen
des brevets

## EUROPEAN SEARCH REPORT

**Application Number**

EP 24 30 5367

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/014387 A1 (CHAPELLIER SÉBASTIEN [FR] ET AL) 13 January 2022 (2022-01-13) <br> * paragraph [0007] - paragraph [0008] * <br> * paragraph [0010] * <br> * paragraph [0053] - paragraph [0054] * <br> * paragraph [0062] * <br> * paragraph [0069] * <br> * paragraph [0087] * <br> * paragraph [0091] * <br> * paragraph [0094] - paragraph [0102] * <br> * figures 2, 3, 5, 10A, 10B * <br> ----- | 1-15 | INV. <br> G06F21/77 <br> G06F8/65 <br> H04L9/32 |
| A | Anonymous: "BSI TR-03110 Advanced Security Mechanisms for Machine Readable Travel Documents - Part 1 - eMRTDs with BAC/PACEv2 and EACv1 (Version 2.10)", Technical Guidelines, 20 March 2012 (2012-03-20), pages 1-131, XP055029789, DE <br> Retrieved from the Internet: URL:https://www.bsi.bund.de/DE/Publikation en/TechnischeRichtlinien/tr03110/index_htm .html <br> [retrieved on 2012-06-13] <br> * page 11 - page 12 * <br> * page 15 - page 17 * <br> ----- | 1-15 | |
| A | CN 102 033 771 B (BEIJING WATCH DATA SYS CO LTD) 25 September 2013 (2013-09-25) <br> * paragraph [0002] * <br> * paragraph [0004] * <br> * paragraph [0006] - paragraph [0008] * <br> * paragraph [0012] - paragraph [0013] * <br> * paragraph [0018] * <br> * paragraph [0027] * <br> * paragraph [0036] * <br> * paragraph [0039] * <br> * paragraph [0045] - paragraph [0046] * <br> ----- | 1-15 | TECHNICAL FIELDS SEARCHED (IPC) <br><br> G06F <br> H04L |

The present search report has been drawn up for all claims

| Place of search | Date of completion of the search | Examiner |
|---|---|---|
| Munich | 2 July 2024 | Bharucha, Zubin |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 30 5367

This annex lists the patent family members relating to the patent documents cited in the above-mentioned European search report.
The members are as contained in the European Patent Office EDP file on
The European Patent Office is in no way liable for these particulars which are merely given for the purpose of information.

02-07-2024

| Patent document cited in search report | Publication date | Patent family member(s) | | Publication date |
|---|---|---|---|---|
| US 2022014387 A1 | 13-01-2022 | CA | 3119676 A1 | 28-05-2020 |
| | | CO | 2021008019 A2 | 30-11-2021 |
| | | EP | 3656577 A1 | 27-05-2020 |
| | | EP | 3883782 A1 | 29-09-2021 |
| | | IL | 283250 A | 29-07-2021 |
| | | JP | 7108257 B2 | 28-07-2022 |
| | | JP | 2022509794 A | 24-01-2022 |
| | | KR | 20210107681 A | 01-09-2021 |
| | | PE | 20212000 A1 | 18-10-2021 |
| | | US | 2022014387 A1 | 13-01-2022 |
| | | WO | 2020104537 A1 | 28-05-2020 |
| | | ZA | 202103391 B | 31-08-2022 |
| CN 102033771 B | 25-09-2013 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- ICAO, DOC 9303, Machine Readable Travel Documents. 2021